(19) Europäisches Patentamt
European Patent Office
Office européen des brevets

(11) **EP 4 458 748 A1**

(12) **EUROPEAN PATENT APPLICATION**
published in accordance with Art. 153(4) EPC

(43) Date of publication:
**06.11.2024 Bulletin 2024/45**

(21) Application number: **22916099.9**

(22) Date of filing: **27.12.2022**

(51) International Patent Classification (IPC):
*B65G 61/00* *(2006.01)*

(52) Cooperative Patent Classification (CPC):
**B65G 61/00**

(86) International application number:
**PCT/JP2022/048197**

(87) International publication number:
**WO 2023/127877 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 JP 2021213787**

(71) Applicant: ThreeBond Co., Ltd.
**Tokyo 192-0398 (JP)**

(72) Inventors:
• KOJIMA, Kazuhiro
**Hachioji-shi, Tokyo 192-0398 (JP)**
• TAGUCHI, Toshiharu
**Hachioji-shi, Tokyo 192-0398 (JP)**
• NOBUTANI, Masaya
**Hachioji-shi, Tokyo 192-0398 (JP)**
• TAKAYAMA, Moritaka
**Hachioji-shi, Tokyo 192-0398 (JP)**
• MASUDA, Ryuichi
**Hachioji-shi, Tokyo 192-0398 (JP)**

(74) Representative: **Haseltine Lake Kempner LLP
One Portwall Square
Portwall Lane
Bristol BS1 6BH (GB)**

(54) **METHOD FOR SHIPPING RESIN COMPOSITION FILLING CONTAINER, COOLING AND THAWING METHOD, AND SHIPPING SYSTEM**

(57)     A shipping method according to the present invention includes: a step of receiving, based on an instruction from an orderer, a filled container obtained by filling a predetermined container with a resin composition; a step of inputting the number of filled containers to a computer; a step of cooling the resin composition in the filled container to a phase transition temperature at a specific cooling rate by a thermostatic chamber; a step of storing the resin composition cooled to the phase transition temperature in a cooling box at a temperature equal to or lower than the phase transition temperature; a step of receiving the number of shipping of the filled containers from the orderer; a step of thawing the resin composition in some or all of the filled containers stored in the cooling box to a conveyance temperature at a specific temperature raising rate by the thermostatic chamber, based on the number of shipping; and a step of shipping, to the orderer, the filled container filled with the resin composition thawed to the conveyance temperature while maintaining a temperature equal to or lower than the conveyance temperature. The phase transition temperature is a temperature at which heat absorption is first generated in DSC (pW) when the temperature is raised at a temperature raising rate of 10°C/min from -200°C by differential scanning calorimetry.

FIG. 6

START

S201  ACQUIRE QUANTITY INFORMATION

S202  ACQUIRE FIRST TEMPERATURE INFORMATION

S203  COOL INSTRUCTION

S204  STORE INSTRUCTION

S205  ACQUIRE NUMBER-OF-SHIPPING INFORMATION

S206  ACQUIRE SECOND TEMPERATURE INFORMATION

S207  INSTRUCT TO RAISE TEMPERATURE

END

EP 4 458 748 A1

**Description**

**TECHNICAL FIELD**

The present invention relates to a method for shipping a resin composition filling a container, and a shipping system.

**BACKGROUND ART**

Conventionally, in storage conditions and transportation of a curable resin composition, division of 25°C, -10°C (refrigeration), and -40°C (freezing) was roughly performed depending on a product, and under any temperature, a quality warranty period was set based on a degree of deterioration in initial characteristics immediately after production. Since storage under a condition where deterioration of product characteristics does not occur was not assumed, it was impossible to maintain the initial characteristics immediately after production. Therefore, customers who use a curable resin composition such as an adhesive or a sealant performed disposal treatment if the quality warranty period of a purchased product passed. In particular, in customers who use a small amount of products, it was impossible to increase the charged amount at the time of production in consideration of the consumption amount and the quality warranty period, and it was difficult to reduce the production cost.

It was known that gelation due to reaction during storage is prevented by storing a curable resin composition at a lower temperature, and a use period of the curable resin composition could be shifted to a longer period. However, it was not clear which temperature should be set, and the temperature was uniformly set. However, there was a known problem that, when the resin composition is placed in a cooling box at a low temperature in a random manner, the resin composition is peeled off from an inner wall of a container, and remains as bubbles (voids) at the time of thawing.

**SUMMARY OF INVENTION**

Conventionally, since a curable resin composition is stored at a temperature at which the curable resin composition changes over time, it was necessary to set a certain warranty period, and it was also difficult to supply fresh lots. In addition, there was a problem that voids are generated during thawing depending on the resin composition.

As a result of intensive studies to achieve the above object, the present inventors have found a method for storing and shipping a resin composition filling a container, and a method related to a shipping system, and have completed the present invention.

The gist of the present invention will be described below. An embodiment of the present invention is a shipping method. The shipping method includes: a step of receiving, based on an instruction from an orderer, a filled container obtained by filling a predetermined container with a resin composition; a step of inputting the number of filled containers to a computer; a step of cooling the resin composition in the filled container to a phase transition temperature at a specific cooling rate by a thermostatic chamber; a step of storing the resin composition cooled to the phase transition temperature in a cooling box at a temperature equal to or lower than the phase transition temperature; a step of receiving the number of shipping of the filled containers from the orderer; a step of thawing the resin composition in some or all of the filled containers stored in the cooling box based on the number of shipping, to a conveyance temperature at a specific temperature raising rate by the thermostatic chamber; and a step of shipping, to the orderer, the filled container filled with the resin composition thawed to the conveyance temperature while maintaining a temperature equal to or lower than the conveyance temperature. The phase transition temperature is a temperature at which heat absorption is first generated in DSC ($\mu$W) when the temperature is raised at a temperature raising rate of 10°C/min from -200°C by differential scanning calorimetry.

Another embodiment of the present invention is a shipping method. The shipping method includes: a step of receiving, based on an instruction from an orderer, a filled container obtained by filling a predetermined container with a resin composition; a step of inputting the number of filled containers to a computer; a step of cooling the resin composition in the filled container to a phase transition temperature at a specific cooling rate by a thermostatic chamber; a step of storing the resin composition cooled to the phase transition temperature in a cooling box at a temperature equal to or lower than the phase transition temperature; a step of receiving the number of shipping of the filled containers from the orderer; a step of thawing the resin composition in some or all of the filled containers stored in the cooling box, based on the number of shipping, to a conveyance temperature at a specific temperature raising rate by the thermostatic chamber; and a step of shipping, to the orderer, the filled container filled with the resin composition thawed to the conveyance temperature while maintaining a temperature equal to or lower than the conveyance temperature. The phase transition temperature is a temperature lower by 15°C than a temperature of a DDSC ($\mu$W/min) local maximum when the temperature is raised at a temperature raising rate of 10°C/min from -200°C by differential scanning calorimetry.

**BRIEF DESCRIPTION OF DRAWINGS**

Fig. 1 is a diagram illustrating a configuration of a shipping system according to a first embodiment of the present invention.

Fig. 2 is a block diagram illustrating a schematic configuration of a computer 10 illustrated in Fig. 1.

Fig. 3 is a flowchart illustrating a shipping procedure of the shipping system illustrated in Fig. 1.

Fig. 4 is a flowchart illustrating a shipping procedure of a shipping system according to a second embodiment.

Fig. 5 is a block diagram illustrating an example of a functional configuration of a computer of a shipping system according to a third embodiment.

Fig. 6 is a flowchart illustrating a processing procedure of the computer illustrated in Fig. 5.

Fig. 7 illustrates a relation between a temperature and DSC in DSC measurement to be described later in TB3331F to be described later.

Fig. 8 illustrates a relation between a temperature and DSC in DSC measurement to be described later in TB3172C to be described later.

Fig. 9 illustrates a relation between an elapsed time and a temperature in a cooling test to be described later, in which a solid line indicates a resin temperature when a thermostatic chamber 1 is used, a dotted line indicates an internal temperature of a chamber of the thermostatic chamber 1, and a broken line indicates a resin temperature when a thermostatic chamber 2 is used.

## DESCRIPTION OF EMBODIMENTS

A shipping method according to an embodiment of the present invention includes: a step of receiving, based on an instruction from an orderer, a filled container obtained by filling a predetermined container with a resin composition; a step of inputting the number of filled containers to a computer; a step of cooling the resin composition in the filled container to a phase transition temperature at a specific cooling rate by a thermostatic chamber; a step of storing the resin composition cooled to the phase transition temperature in a cooling box at a temperature equal to or lower than the phase transition temperature; a step of receiving the number of shipping of the filled containers from the orderer; a step of thawing the resin composition in some or all of the filled containers stored in the cooling box, based on the number of shipping, to a conveyance temperature at a specific temperature raising rate by the thermostatic chamber; and a step of shipping, to the orderer, the filled container filled with the resin composition thawed to the conveyance temperature while maintaining a temperature equal to or lower than the conveyance temperature. The phase transition temperature is a temperature at which heat absorption is first generated in DSC ($\mu$W) when the temperature is raised at a temperature raising rate of 10°C/min from -200°C by differential scanning calorimetry. In the present invention, particularly in the resin composition containing a filler, it is possible to suppress peeling from an inner surface of the container and to suppress voids generated at the time of thawing.

The resin composition that can be used in the present invention may be a mixture of resins that are liquid or solid at 25°C. Specifically, the resin composition may be a one-liquid type or a combination of two or more liquid agents. In the present invention, the resin composition is suitably used for a composition containing a curable resin among resins, the curable resin is cured by reaction of a functional group to polymerize. In the one-liquid type of the curable resin composition, since a main agent and a curing agent are mixed, gelation easily occurs, and storage at a low temperature is required.

Examples of the functional group of the main agent of the curable resin composition include an epoxy group, an isocyanate group, a vinylsiloxane group, a (meth) acrylic group, a vinyl ether group, and the like, as the skeleton of the main agent, various skeletons such as a bisphenol skeleton, a novolac phenol skeleton, a polyurethane skeleton, a polyether skeleton, a polyester skeleton, a polycarbonate skeleton, a polyurethane modified skeleton, a polyepoxy-modified skeleton, a polyurea skeleton, a polyorganosiloxane skeleton, a polybutadiene skeleton, a polyisoprene skeleton, a polyolefin skeleton such as a polyisobutylene skeleton, a poly (meth) acrylic skeleton, and a hydrogenated skeleton thereof can be used, and the prevent invention is not limited thereto. A curing agent that crosslinks the main agent and a curing accelerator that accelerates the reaction may be included during the reaction. In addition, as an optional component of the curable resin composition, various additives other than a foam stabilizer such as an adhesion aid such as a silane coupling agent, a filler, a tackifier, rubber/thermoplastic elastomer, rubber-like polymer fine particles, a storage stabilizer such as BHT, an antioxidant, a light stabilizer, a plasticizer, a dye, a pigment, a flame retardant, a sensitizer, an organic solvent, a heavy metal inactivator, a crystallization inhibitor, an ion trapping agent, an emulsifier, a water dispersion stabilizer, a release agent, a leveling agent, a wax, a rheology control agent, and a surfactant may be blended in an appropriate amount.

For example, when the functional group of the main agent is an epoxy group, the main agent may be referred to as an epoxy resin, and the curable resin composition containing the main agent may be referred to as an epoxy-based resin. Similarly, when the skeleton of the main agent is a polyorganosiloxane skeleton, the main agent may be referred to as a silicone resin, and the curable resin composition containing the main agent may be referred to as a silicone-based resin. Furthermore, when the curable resin composition is applied to an adhesive, a sealant, a conductive adhesive, or the like, the curable resin composition is called, for example, an epoxy-based sealant, an epoxy-based conductive adhesive, a silicone-based sealant, or the like.

Examples of the cured form of the curable resin composition include a thermosetting type, a photocuring type, a moisture curing type, and the like, but the present invention is not limited thereto. In particular, the storage and shipping system according to the present invention is effective for the thermosetting type.

The predetermined container that can be used in the present invention may be able to be filled with the resin composition. The predetermined container is made of metal, plastic, or the like, but the present invention is not limited thereto. Examples of the shape include an ointment container, a syringe, a cartridge, and the like, but the present invention is not limited thereto. In particular, since the plastic container is a molded article, a mold release agent remains on the surface, the resin composition is easily peeled off from the container interface due to shrinkage at a low temperature, and a peeled region remains as a void at the time of thawing. Hereinafter, the container filled with the resin composition may be referred to as a filled container.

The thermostatic chamber that can be used in the present invention may be able to cool the resin composition filled in the container to a phase transition temperature described later or a temperature of -5°C or lower. The thermostatic chamber is preferably a thermostatic chamber capable of cooling the inside of the chamber at a cooling rate of 10°C/min or more, more preferably at a cooling rate of 10 to 20°C/min. Accordingly, it is preferable to reduce the resin temperature of the resin composition at a cooling rate of 2.0°C/min or more, and the cooling rate is more preferably 2.0 to 5.0°C/min. The thermostatic chamber can also be used for raising the temperature. The thermostatic chamber that can be used in the present invention performs thawing to a conveyance temperature at a specific temperature raising rate. It is preferable to thaw the inside of the chamber in the thermostatic chamber at a temperature raising rate of 1.0°C/min or less. Specific examples of the thermostatic chamber include ARSF-0250-15, ARSF-0400-15, ARSF-0800-15, and the like manufactured by ESPEC CORPORATION, but the present invention is not limited thereto. The thermostatic chamber may be a specific example of a first temperature adjustment unit and a second temperature adjustment unit of the present invention.

The phase transition temperature in the present invention is measured in advance by differential scanning calorimetry (DSC). The phase transition temperature is set as a temperature (also referred to as the phase transition temperature) at which heat absorption is first generated in the DSC ($\mu$W) when the temperature is raised from -200°C (measurement start temperature) at a temperature raising rate of 10°C/min in a temperature range of -200°C to 100°C (measurement end temperature). Here, the measurement start temperature can be appropriately set to a temperature higher than -200°C, and the measurement end temperature can be appropriately set to a temperature lower than 100°C.

In determining the phase transition temperature, DDSC ($\mu$W/min) may be referred to, and specifically, a temperature lower than a DDSC (dynamic DSC) local maximum temperature by 15°C may be used as the phase transition temperature in the present invention. Depending on the type of the curable resin, the phase transition temperature may be higher or lower, but in consideration of the progress of the reaction during storage, the phase transition temperature is preferably -5°C at the highest. The phase transition temperature varies depending on the type of the resin composition, but does not vary among production lots of the produced resin composition.

The measurement start temperature can be changed depending on the type of the skeleton of the main agent of the curable resin composition, and the measurement may be started at -100 to -80°C for components other than the polyorganosiloxane skeleton. The measurement end temperature may be lowered depending on the reaction start temperature of the curable resin composition, and the maximum temperature may be 25 to 40°C when the curable resin composition has high-speed curability at low-temperature.

In addition, at the time of DSC measurement, noise may be generated depending on what is added to the composition, but when the temperature does not correspond to the temperature at which heat absorption is first generated obviously from the composition constitution, the temperature is not the phase transition temperature.

In the present invention, "cooling to the phase transition temperature at the specific cooling rate by the thermostatic chamber" means that the temperature may reach a temperature equal to or lower than the phase transition temperature, and the resin temperature may reach the phase transition temperature at a cooling rate of 10 to 20°C/min in the chamber or at a cooling rate of 2.0°C/min or more of the resin. In addition, by storing at a temperature equal to or lower than the phase transition temperature, the initial characteristics immediately after production can be maintained. According to the number of shipping input into a computer of an order receiver, it is possible to ship a product maintaining the initial characteristics by performing thawing described below at any time.

The cooling box that can be used in the present invention is a so-called freezer or the like, and a set temperature of 0°C or lower may be able to be maintained. Specific examples thereof include a chest type super freezer DF-400e manufactured by DAILEY CORPORATION and the like, but the present invention is not limited thereto. The cooling box may be a specific example of a storage unit of the present invention.

The computer in the present invention is used as a terminal to which an orderer or an order receiver inputs information. Software and applications are installed in the computer, and are used to manage information. Furthermore, computers can share information via the Internet.

The orderer and the order receiver in the present invention may be the same or different. The orderer provides the resin composition filled in the container (filled container), and the order receiver receives and stores the resin composition filled in the container (filled container), and inputs the number of resin compositions filled in the received container to the computer of the order receiver to perform management. The orderer transmits the number of shipping from the computer of the orderer to the computer of the order receiver via the Internet. The number of shipping is a finite integer larger than 1.

The conveyance temperature in the present invention is a temperature of so-called cool transport set by a carrier, and there is generally a setting of -5°C, -10°C, or -20°C. According to the number of shipping by the orderer, the order receiver transports the resin composition filled in the container to the order receiver while maintaining the conveyance temperature. The carrier may be the order receiver, or may be an external organization other than the order receiver. The conveyance temperature may be referred to as a transport temperature.

The temperature raising rate in the present invention means that the temperature raising rate in the chamber in the thermostatic chamber is set to 1.0°C/min or less, so that a rapid expansion difference between the container and the resin composition can be suppressed.

Since the resin composition filled in the container is stored at a temperature lower than the phase transition temperature in the cooling box, the resin composition can be stored for several decades or more at the phase transition temperature in prediction from a reaction rate constant k by the Arrhenius equation (Arrhenius plot) as in the following Equation 1. The Arrhenius equation is an equation proposed by Svante Arrhenius in 1884 that predicts the rate of a chemical reaction at a certain temperature. However, considering the update of the lot, it is preferable to store it for at least one year.

[Mathematical formula 1]

$$k = A \exp\left(-\frac{Ea}{RT}\right)$$

k: Rate constant of reaction

A: Constant irrelevant to temperature

Ea: Activation energy

R: Gas constant

T: Absolute temperature

Depending on the charged amount of one lot of the resin composition, when one lot is filled in a container, many products can be produced. However, the amount of products to be used increases or decreases due to the demand of the customer according to the change in the economic environment, a situation in which one lot cannot be completely used up also occurs, and the remaining products have to be discarded. However, with the shipping system according to the present invention, it is possible to appropriately supply products and reduce discarded products.

Conventionally, a curable resin composition such as an adhesive or a sealant was frozen and stored. However, the freezing storage temperature can be lowered in a freezing and thawing step according to the present invention so that no void is generated at 25°C. Accordingly, in the system, the freezing storage period set to one month, three months, or the like can be set to one year or more. And a warranty period based on the time of production can be changed to a warranty period based on the time of thawing, and the curable resin composition can be supplied to the orderer while maintaining performance and characteristics immediately after production.

<First Embodiment>

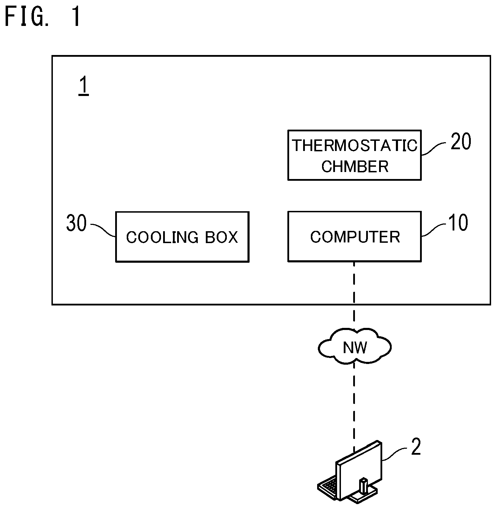

Fig. 1 is a block diagram illustrating an example of a configuration of a shipping system 1 according to a first embodiment of the present invention. The shipping system 1 includes, for example, a computer 10, a thermostatic chamber 20, and a cooling box 30. The thermostatic chamber 20 and the cooling box 30 are as described above.

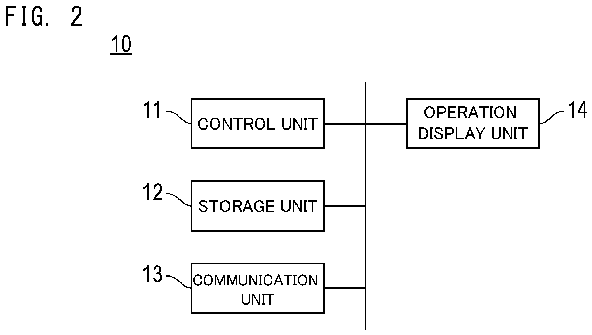

Fig. 2 is a block diagram illustrating a schematic configuration of the computer 10.

The computer 10 is a terminal used by the order receiver, and is connected to a computer 2 of the orderer via a network, for example.

The computer 10 includes a control unit 11, a storage unit 12, a communication unit 13, and an operation display unit 14. The components are communicably connected to each other via a bus.

The control unit 11 includes a CPU (Central Processing Unit), and executes control of each component described above and various types of arithmetic processing according to a program.

The storage unit 12 includes a ROM(Read Only Memory) that stores various programs and various data in advance, a RAM(Random Access Memory) that temporarily stores programs and data as a work area, a hard disk that stores various programs and various data, and the like.

The communication unit 13 includes an interface for communicating with other terminals and devices via a network. The communication unit 13 transmits and receives various data and the like to and from the computer 2 of the orderer, for example.

The operation display unit 14 includes an LCD (Liquid Crystal Display), an organic EL display, or the like, which includes a touch sensor. The operation display unit 14 displays various types of information and receives various operations of a user.

For example, the order receiver inputs the number of filled containers received from the orderer to the computer 10 via the operation display unit 14. The computer 10 receives the number of shipping of the filled containers from the computer 2 of the orderer via the communication unit 13.

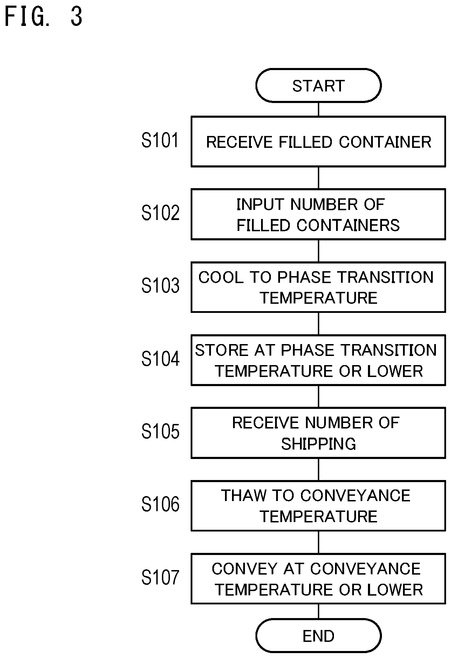

Fig. 3 is a flowchart illustrating an example of a shipping method using the shipping system 1.

The order receiver first receives a filled container obtained by filling a predetermined container with a resin composition, based on an instruction from the orderer (step S101). For example, the orderer transports a predetermined number of filled containers to the order receiver.

Next, the order receiver inputs the number of received filled containers to the computer 10 (step S102). The order receiver may input the amount of the resin composition filled in the filled container to the computer 10.

Next, the order receiver cools the resin composition filled in the received filled container to the phase transition temperature of the resin composition at a specific cooling rate by the thermostatic chamber 20 (step S103). The phase transition temperature of the resin composition is measured in advance by DSC or DDSC. The phase transition temperature is, for example, -5°C or lower. For example, the order receiver cools the resin composition in all the received filled containers to the phase transition temperature. The cooling rate at this time is, for example, a rate at which the inside of the chamber in the thermostatic chamber 20 is cooled at a cooling rate of 10°C/min or more. The cooling rate may be a rate at which the resin temperature of the resin composition is reduced at a cooling rate of 2.0°C/min or more. Here, "cooling to the phase transition temperature at the specific cooling rate by the thermostatic chamber" may mean that the temperature reaches a temperature equal to or lower than the phase transition temperature.

After the temperature of the resin composition filled in the filled container reaches the phase transition temperature by the thermostatic chamber 20, the order receiver stores the resin composition in the cooling box 30 at a temperature equal to or lower than the phase transition temperature (step S104). The resin composition is stored in a state of being filled in the container. At least a part of the filled containers is stored, for example, for one year or more.

Next, the order receiver receives the number of shipping of the filled containers from the orderer (step S105). For example, the orderer inputs the number of shipping of the filled containers to the computer 2, so that the computer 10 receives the number of shipping via the network.

Next, based on the number of shipping received in step S105, the order receiver thaws the resin composition in some or all of the filled containers stored in the cooling box 30 to the conveyance temperature at a specific temperature raising rate by the thermostatic chamber 20 (step S106). The conveyance temperature is, for example, -5°C, -10°C, or -20°C. The specific temperature raising rate is, for example, a rate at which the inside of the chamber in the thermostatic chamber 20 is heated at a temperature raising rate of 1.0°C/min or less. The thermostatic chamber 20 used herein may be the same as or different from the thermostatic chamber 20 used for cooling.

Next, the order receiver ships the filled container filled with the resin composition thawed in step S106 to the orderer while maintaining a temperature equal to or lower than the conveyance temperature (step S107). For example, the resin composition stored at a temperature equal to or lower than the phase transition temperature is shipped to the orderer through the above steps.

<Second Embodiment>

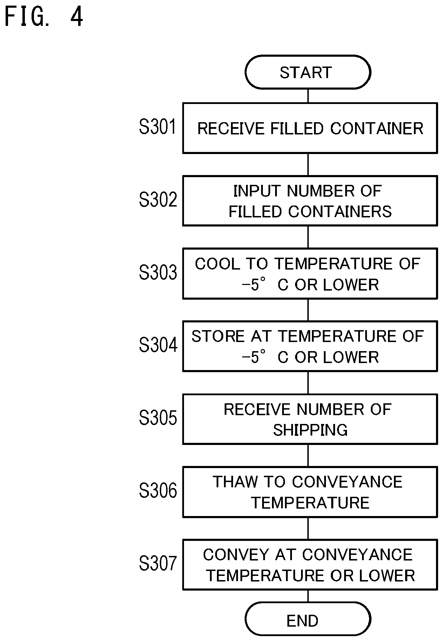

Fig. 4 is a flowchart illustrating an example of a shipping method using a shipping system 1 according to a second embodiment.

In the shipping system 1, first, steps S301 and S302 are performed similarly to steps S101 and S102 described in the first embodiment.

Next, an order receiver cools a resin composition filled in a received filled container to a temperature of -5°C or lower at a cooling rate of 10°C/min or more by a thermostatic chamber 20 (step S303). For example, the order receiver cools the resin composition in all the received filled containers to -20°C.

After the temperature of the resin composition filled in the filled container reaches a temperature of -5°C or lower by the thermostatic chamber 20, the order receiver stores the resin composition in a cooling box 30 at a temperature of -5°C or lower (step S304). The resin composition is stored in a state of being filled in the container. At least a part of the filled containers is stored, for example, for one year or more.

Next, the order receiver receives the number of shipping of the filled containers from an orderer (step S305). For example, the orderer inputs the number of shipping of the filled containers to the computer 2, so that the computer 10 receives the number of shipping via the network.

Next, based on the number of shipping received in step S305, the order receiver thaws the resin composition in some or all of the filled containers stored in the cooling box 30 to a conveyance temperature at a temperature raising rate of 1.0°C/min or less by the thermostatic chamber 20 (step S306). The conveyance temperature is, for example, 25°C.

Next, the order receiver ships the filled container filled with the resin composition thawed in step S306 to the orderer while maintaining a temperature equal to or lower than the conveyance temperature (step S307). For example, the resin composition stored at a temperature of -5°C or lower is shipped to the orderer through the above steps.

<Third Embodiment>

A part or all of the method for shipping the resin composition described in the first embodiment and the second embodiment may be controlled by a computer 10.

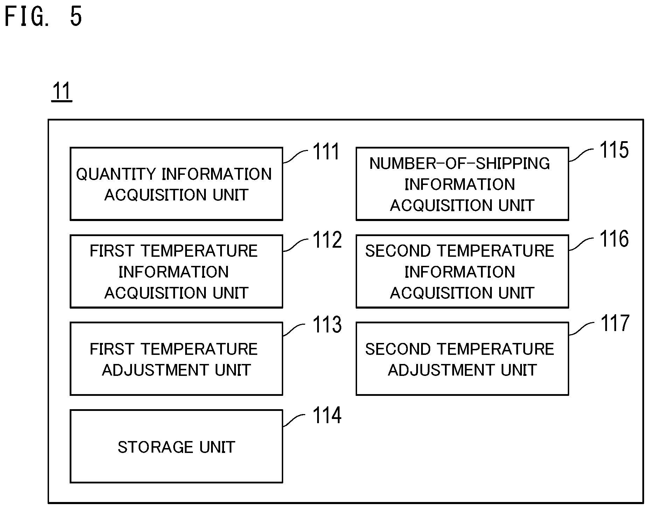

Fig. 5 is a block diagram illustrating an example of a functional configuration of the computer 10.

A control unit 11 of the computer 10 reads a program and executes processing, thereby functioning as a quantity information acquisition unit 111, a first temperature information acquisition unit 112, a first temperature adjustment unit 113, a storage unit 114, a number-of-shipping information acquisition unit 115, a second temperature information acquisition unit 116, and a second temperature adjustment unit 117. Each function of the quantity information acquisition unit 111, the first temperature information acquisition unit 112, the first temperature adjustment unit 113, the storage unit 114, the number-of-shipping information acquisition unit 115, the second temperature information acquisition unit 116, and the second temperature adjustment unit 117 may be included in a CPU of a thermostatic chamber 20, a cooling box 30, and the like.

The quantity information acquisition unit 111 acquires quantity information regarding the number of filled containers received from an orderer. For example, an order receiver inputs the number of filled containers received from the orderer to the computer 10, so that the quantity information acquisition unit 111 acquires the quantity information.

The first temperature information acquisition unit 112 acquires first temperature information regarding a phase transition temperature of the resin composition filled in the filled container. The phase transition temperature is measured by, for example, DSC or DDSC. The first temperature information acquisition unit 112 may acquire the first temperature information from a differential scanning calorimeter or the like, or may acquire the first temperature information by the order receiver inputting the first temperature information to the computer 10. The first temperature information acquisition unit 112 may acquire first temperature information regarding an appropriate temperature of -5°C or lower for the resin composition filled in the filled container.

The first temperature adjustment unit 113 controls the thermostatic chamber 20 based on the first temperature information, and adjusts the resin composition in the filled container to the phase transition temperature at a specific cooling rate, or to an appropriate temperature of -5°C or lower at a cooling rate of 10°C/min or more.

Here, "adjusting to the phase transition temperature at the specific cooling rate" may mean that the temperature reaches a temperature equal to or lower than the phase transition temperature.

The storage unit 114 controls the cooling box 30 to store the resin composition adjusted to the phase transition temperature or the appropriate temperature of -5°C or lower by the thermostatic chamber 20 at a temperature of the phase transition temperature or lower or -5°C or lower.

The number-of-shipping information acquisition unit 115 acquires number-of-shipping information regarding the number of shipping of the filled containers. The number-of-shipping information is acquired, for example, by the computer 10 receiving the number of shipping from the computer 2 of the orderer.

The second temperature information acquisition unit 116 acquires second temperature information regarding a conveyance temperature of the resin composition stored in the cooling box 30. For example, the second temperature information acquisition unit 116 acquires the second temperature information by the order receiver inputting the second temperature information to the computer 10.

The second temperature adjustment unit 117 controls thermostatic chamber 20 based on the second temperature information to adjust the resin composition stored in the cooling box 30 to the conveyance temperature. For example, the second temperature adjustment unit 117 thaws the resin composition stored at a temperature of -5°C or lower at a temperature raising rate of 1.0°C/min or less, and adjusts the resin composition to the conveyance temperature.

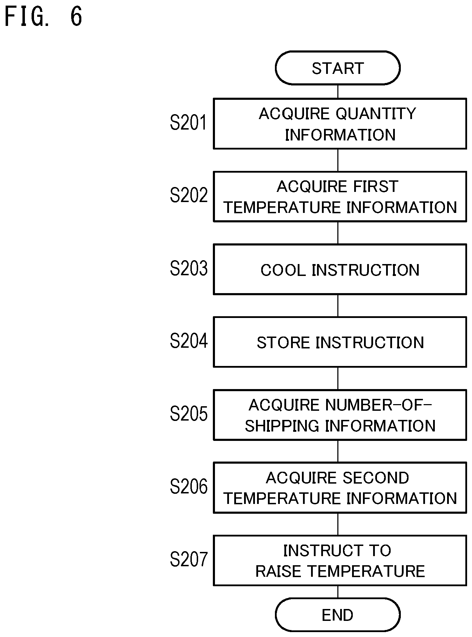

Fig. 6 is a flowchart illustrating a procedure of processing executed in the computer 10. Note that the processing of the computer 10 illustrated in the flowchart of Fig. 6 is stored as a program in the storage unit 12 of the computer 10, and is executed by the control unit 11 controlling each unit.

First, the computer 10 acquires quantity information (step S201). Next, the computer 10 acquires first temperature information (step S202). The computer 10 may acquire the quantity information after acquiring the first temperature information, or may acquire them simultaneously.

After acquiring the first temperature information, the computer 10 instructs the thermostatic chamber 20 to perform cooling (step S203). Here, in the cooling by the thermostatic chamber, the temperature may reach a temperature equal to or lower than the phase transition temperature or equal to or lower than -5°C. Next, the computer 10 instructs the cooling box 30 to perform storing (step S204).

Next, the computer 10 acquires number-of-shipping information and second temperature information (steps S205 and S206). Thereafter, the computer 10 instructs the thermostatic chamber 20 to raise the temperature and ends the processing (step S207). Further, the computer 10 may control shipping of the filled containers to the orderer.

Examples

Next, the present invention will be described in more detail with reference to examples, but the present invention is not limited only to these embodiments.

In order to perform DSC measurement, a cooling test, and observation of voids in the resin composition, the following products were prepared.

Curable resin composition

• Epoxy-based conductive adhesive ThreeBond 3331F (container: 70 cc plastic syringe manufactured by MUSASHI ENGINEERING CORPORATION) (hereinafter, it is abbreviated as TB3331F.)

• Epoxy-based sealant ThreeBond 3127C (container: 5 cc plastic syringe manufactured by MUSASHI ENGINEERING CORPORATION) (hereinafter, it is abbreviated as TB3172C.)

• Silicone-based sealant ThreeBond 1215 (container: 500 cc polypropylene plastic container) (hereinafter, it is abbreviated as TB1215.)

[DSC measurement]

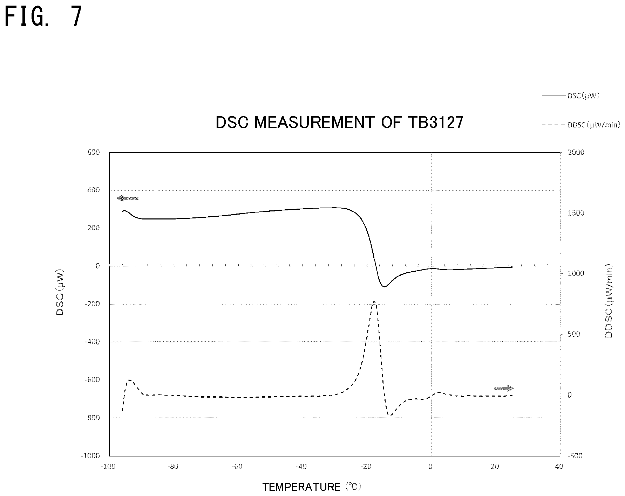

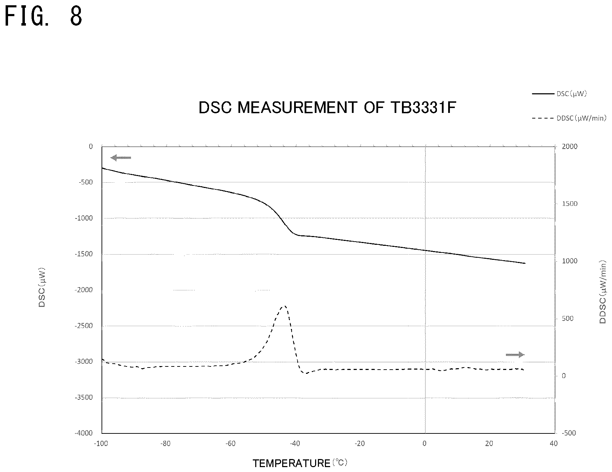

Measurement was performed by differential scanning calorimetry (DSC) using XD-SC7200 manufactured by HITACHI HIGH-TECH CORPORATION. A temperature raising rate was 10°C/min in a temperature range of -100 to 30°C. A temperature (phase transition temperature) at which heat absorption is first generated in DSC ($\mu$W) and a temperature of a DDSC ($\mu$W/min) local maximum are confirmed. The measurement results of TB3331F and TB3172C are shown in Figs. 7 and 8, respectively, and specific numerical values are as follows.

TB3127C

Phase transition temperature in DSC: -32°C

Temperature of DDSC local maximum: -18°C

TB3331F

Phase transition temperature in DSC: -56°C

Temperature of DDSC local maximum: -44°C

[Cooling test]

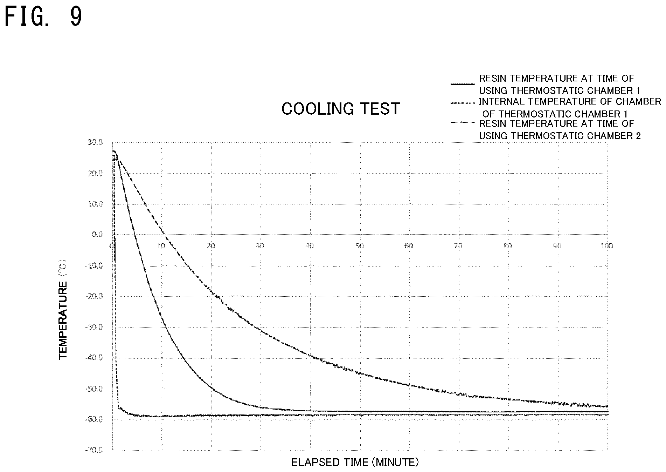

According to the following specifications, cooling was performed by each of a thermostatic chamber 1 and a thermostatic chamber 2, and the resin temperature of TB3331F of the same lot was measured. A thermocouple is inserted into the resin composition from a syringe discharge port and fixed to a thermostatic chamber using a Memory-Hi-Logger LR8431 manufactured by HIOKI E.E. CORPORATION. The measurement was started from about 25°C, and the temperature according to an elapsed time was measured. In the thermostatic chamber 1, an internal temperature of a chamber was also measured at the same time. The measurement result is shown in Fig. 9. Here, a solid line represents the resin temperature of the thermostatic chamber 1, a dotted line represents the internal temperature of the chamber of the thermostatic chamber 1, and a broken line represents the resin temperature of the thermostatic chamber 2. In addition, times (minutes) taken for the resin temperature to reach -40°C, -50°C, and -57°C are summarized in Table 1. Here, the reason why the temperature is set to -57°C is that the resin temperature does not reach -60°C even when the internal temperature of the chamber is -60°C.

Specifications

Thermostat 1: ARSF-0250-15 manufactured by ESPEC CORPORATION

Setting of thermostatic chamber 1: constant temperature setting at -60°C

Thermostat 2: chest type super freezer DF-400e manufactured by DAILAY CORPORATION

Setting of thermostatic chamber 2: constant temperature setting at -60°C

[Table 1]

| Device | Arrival time (minute) | | |
|---|---|---|---|
| | -40°C | -50°C | -57°C |
| Thermostat 1 | 14.3 | 20.2 | 36.7 |
| Thermostat 2 | 40.8 | 63.3 | 113.5 |

[Observation 1 of void in resin composition]

TB3331F is cooled by the thermostatic chamber 1 or 2 using a method similar to the cooling test. Each TB3331F is left under a -60°C atmosphere in the cooling box for one day, and then the temperature is raised to -20°C at a temperature raising rate of 0.8°C/min by the thermostatic chamber 1. TB3331F is left at a normal temperature one hour before observation. Voids were confirmed in a cross-sectional photograph by a microfocus X-ray CT device according to the following observation conditions. Voids of 50 μm or more can be confirmed. As a result, two very small voids of less than 100 μm were confirmed in the case of the thermostatic chamber 1, and several voids were confirmed in a center region of the syringe in the case of the thermostatic chamber 2. The voids were several hundred μm to 1 mm, and voids larger than 1 mm were also confirmed.

Measurement conditions

Voltage: 240 kV

Current: 200 μA

Measurement time: about 25 minutes/1 sample

Measurement environmental temperature: under 18 to 20°C atmosphere

Measurement range: region filled with resin composition

[Observation 2 of void in resin composition]

TB3172C is cooled by the thermostatic chamber 1 using a method similar to the cooling test. TB3172C is left under a - 60°C atmosphere in the cooling box for one day, and then the temperature is raised to -20°C at a temperature raising rate of 0.8°C/min by the thermostatic chamber 1. TB3172C is left at a normal temperature one hour before observation. A syringe plunger and an air-type applicator were installed, and 5 g of the resin composition was continuously discharged until all the resin compositions were discharged, and the appearance of each fragment (one discharge) was visually observed for confirming the presence or absence of voids. As a result, there was no fragment in which voids were confirmed.

[Observation 3 of void in resin composition]

TB1215 is cooled by a thermostatic chamber 3 according to the following specifications. The inside of the chamber is cooled at a cooling rate of 10°C/min or more by the thermostatic chamber 3 and the temperature reaches -20°C.

Specifications

Thermostat 3: ARSF-0250-15 manufactured by ESPEC CORPORATION

Setting of thermostatic chamber 3: constant temperature setting at -20°C

TB1215 cooled by the thermostatic chamber 3 is left under a -20°C atmosphere for 3 days. And then the temperature is raised to 25°C at a temperature raising rate of 0.1°C/min by the thermostatic chamber 3. Or the temperature is raised to 25°C by being left under a 25°C atmosphere immediately from -20°C. As a result of opening the lid of the plastic container and visually observing the appearance to confirm the voids, no voids were confirmed on the surface in the case where the temperature raising rate was 0.1°C/min, and aggregates were confirmed on the surface in the case where the plastic container was left under a 25°C atmosphere.

Although the embodiments of the present invention have been described in detail, this is illustrative and exemplary and not restrictive, and it is clear that the scope of the present invention should be interpreted by the appended claims.

The present invention includes the following aspects and forms.

A first embodiment of the present invention is a shipping method. The shipping method includes: a step of receiving, based on an instruction from an orderer, a filled container obtained by filling a predetermined container with a resin composition; a step of inputting the number of filled containers to a computer; a step of cooling the resin composition in the filled container to a phase transition temperature at a specific cooling rate by a thermostatic chamber; a step of storing the resin composition cooled to the phase transition temperature in a cooling box at a temperature equal to or lower than the phase transition temperature; a step of receiving the number of shipping of the filled containers from the orderer; a step of thawing the resin composition in some or all of the filled containers stored in the cooling box, based on the number of shipping, to a conveyance temperature at a specific temperature raising rate by the thermostatic chamber; and a step of shipping, to the orderer, the filled container filled with the resin composition thawed to the conveyance temperature while maintaining a temperature equal to or lower than the conveyance temperature. The phase transition temperature is a temperature at which heat absorption is first generated in DSC (μW) when the temperature is raised at a temperature raising rate of 10°C/min from -200°C by differential scanning calorimetry.

A second embodiment of the present invention is a shipping method. The shipping method includes: a step of receiving, based on an instruction from an orderer, a filled container obtained by filling a predetermined container with a resin composition; a step of inputting the number of filled containers to a computer; a step of cooling the resin composition in the filled container to a phase transition temperature at a specific cooling rate by a thermostatic chamber; a step of storing the resin composition cooled to the phase transition temperature in a cooling box at a temperature equal to or lower than the phase transition temperature; a step of receiving the number of shipping of the filled containers from the orderer; a step of thawing the resin composition in some or all of the filled containers stored in the cooling box, based on the number of shipping, to a conveyance temperature at a specific temperature raising rate by the thermostatic chamber; and a step of shipping, to the orderer, the filled container filled with the resin composition thawed to the conveyance temperature while maintaining a temperature equal to or lower than the conveyance temperature. The phase transition temperature is a temperature lower by 15°C than a temperature of a DDSC (μW/min) local maximum when the temperature is raised at a temperature raising rate of 10°C/min from -200°C by differential scanning calorimetry.

A third embodiment of the present invention is the shipping method according to the first embodiment or the second embodiment, in which the specific cooling rate is a rate at which the inside of a chamber in the thermostatic chamber is cooled at a cooling rate of 10°C/min or more.

A fourth embodiment of the present invention is the shipping method according to any one of the first to third embodiments, in which the specific cooling rate is a rate at which a resin temperature of the resin composition is reduced at a cooling rate of 2.0°C/min or more.

A fifth embodiment of the present invention is the shipping method according to any one of the first to fourth embodiments, in which the phase transition temperature is - 5°C or lower.

A sixth embodiment of the present invention is the shipping method according to any one of the first to fifth embodiments, in which the resin composition contains a curable resin.

A seventh embodiment of the present invention is the shipping method according to any one of the first to sixth embodiments, in which the specific temperature raising rate is a rate at which the inside of a chamber in the thermostatic chamber is heated at a temperature raising rate of 1.0°C/min or less.

An eighth embodiment of the present invention is the shipping method according to any one of the first to seventh embodiments, in which the resin composition stored for at least one year exists in the cooling box.

A ninth embodiment of the present invention is a shipping method. The shipping method includes: a step of receiving, based on an instruction from an orderer, a filled container obtained by filling a predetermined container with a resin composition; a step of inputting the number of filled containers to a computer; a step of cooling the resin composition in the filled container to a temperature of -5°C or lower at a cooling rate of 10°C/min or more by a thermostatic chamber; a step of storing the resin composition cooled to the temperature of -5°C or lower in a cooling box at the temperature of -5°C or lower; a step of receiving the number of shipping of the filled containers from the orderer; a step of thawing the resin composition in some or all of the filled containers stored in the cooling box, based on the number of shipping, to a conveyance temperature at a temperature raising rate of 1.0°C/min or less by the thermostatic chamber; and a step of shipping, to the orderer, the filled container filled with the resin composition thawed to the conveyance temperature while maintaining a temperature equal to or lower than the conveyance temperature.

A tenth embodiment of the present invention is a cooling and thawing method for a filled container obtained by filling a predetermined container with a resin composition. The cooling and thawing method includes: a step of cooling the filled container obtained by filling the predetermined container with the resin composition to a temperature of -5°C or lower at a cooling rate of 10°C/min or more by a thermostatic chamber; a step of storing the resin composition cooled to the temperature of -5°C or lower in a cooling box at the temperature of -5°C or lower; and a step of thawing the resin composition in the filled containers stored in the cooling box at a temperature raising rate of 1.0°C/min or less by the thermostatic chamber.

An eleventh embodiment of the present invention is a shipping system for shipping a filled container obtained by filling a predetermined container with a resin composition after receiving and storing the filled container. The shipping system includes: a temperature information acquisition unit acquiring temperature information regarding a phase transition temperature of the resin composition; a first temperature adjustment unit adjusting the resin composition in the filled container to the phase transition temperature based on the temperature information; a storage unit storing the resin composition adjusted to the phase transition temperature at a temperature equal to or lower than the phase transition temperature; a number-of-shipping information acquisition unit acquiring number-of-shipping information regarding the number of shipping of the filled containers; and a second temperature adjustment unit adjusting the resin composition in some or all of the filled containers stored in the storage unit, based on the number-of-shipping information, to a conveyance temperature. The phase transition temperature is a temperature at which heat absorption is first generated in differential scanning calorimetry in which the resin composition is heated at a temperature raising rate of 10°C/min from -200°C.

A twelfth embodiment of the present invention is a shipping system for shipping a filled container obtained by filling a predetermined container with a resin composition after receiving and storing the filled container. The shipping system includes: a temperature information acquisition unit acquiring temperature information regarding a phase transition temperature of the resin composition; a first temperature adjustment unit adjusting the resin composition in the filled container to the phase transition temperature based on the temperature information; a storage unit storing the resin composition adjusted to the phase transition temperature at a temperature equal to or lower than the phase transition temperature; a number-of-shipping information acquisition unit acquiring number-of-shipping information regarding the number of shipping of the filled containers; and a second temperature adjustment unit adjusting the resin composition in some or all of the filled containers stored in the storage unit, based on the number-of-shipping information, to a conveyance temperature. The phase transition temperature is a temperature lower by 15°C than a temperature of a local maximum in dynamic differential scanning calorimetry in which the resin composition is heated at a temperature raising rate of 10°C/min from -200°C.

A thirteenth embodiment of the present invention is the shipping system according to the eleventh embodiment or the twelfth embodiment, in which the first temperature adjustment unit includes a thermostatic chamber, and adjusts the resin composition to the phase transition temperature by adjusting an internal temperature of a chamber of the thermostatic chamber at a rate of 10°C/min or more.

A fourteenth embodiment of the present invention is the shipping system according to any one of the eleventh to thirteenth embodiments, in which the first temperature adjustment unit adjusts a resin temperature of the resin composition at a rate of 2.0°C/min or more.

A fifteenth embodiment of the present invention is the shipping system according to any one of the eleventh to fourteenth embodiments, in which the phase transition temperature is -5°C or lower.

A sixteenth embodiment of the present invention is the shipping system according to any one of the eleventh to fifteenth embodiments, in which the resin composition contains a curable resin.

A seventeenth embodiment of the present invention is the shipping system according to any one of the eleventh to sixteenth embodiments, in which the second temperature adjustment unit includes a thermostatic chamber, and adjusts the resin composition to the conveyance temperature by adjusting an internal temperature of a chamber of the thermostatic chamber at a rate of 1.0°C/min or less.

An eighteenth embodiment of the present invention is the shipping system according to any one of the eleventh to seventeenth embodiments, in which the storage unit is configured to be able to store the filled container for one year or more.

A nineteenth embodiment of the present invention is a shipping system for shipping a filled container obtained by filling a predetermined container with a resin composition after receiving and storing the filled container. The shipping system includes: a first temperature adjustment unit adjusting the resin composition in the filled container to a temperature of -5°C or lower at a cooling rate of 10°C/min or more; a storage unit storing the resin composition adjusted to the temperature of -5°C or lower at the temperature of -5°C or lower; a number-of-shipping information acquisition unit acquiring number-of-shipping information regarding the number of shipping of the filled containers; and a second temperature adjustment unit adjusting the resin composition in some or all of the filled containers stored in the storage unit, based on the number-of-shipping information, to a conveyance temperature at a temperature raising rate of 1.0°C/min or less.

Industrial Applicability

Reduction in the discard amount of the produced curable resin composition, supply of fresh lots for products to be thawed and shipped, reduction in production cost and reduction in production frequency (reduction in emergency production) due to an increase in the number of batches, and reduction in frequency of quality abnormality due to reduction in the number of lots are enabled.

The present application is based on the Japanese patent application No. 2021-213787 filed on December 28, 2021. The disclosed contents thereof are referred to and incorporated here as a whole.

Reference Signs List

1     shipping system
2     computer (orderer)
10    computer (order receiver)
20    thermostatic chamber
30    cooling box

**Claims**

1.  A shipping method comprising:

    a step of receiving, based on an instruction from an orderer, a filled container obtained by filling a predetermined container with a resin composition;
    a step of inputting the number of filled containers to a computer;
    a step of cooling the resin composition in the filled container to a phase transition temperature at a specific cooling rate by a thermostatic chamber;
    a step of storing the resin composition cooled to the phase transition temperature in a cooling box at a temperature equal to or lower than the phase transition temperature;
    a step of receiving the number of shipping of the filled containers from the orderer;
    a step of thawing the resin composition in some or all of the filled containers stored in the cooling box, based on the number of shipping, to a conveyance temperature at a specific temperature raising rate by the thermostatic chamber; and
a step of shipping, to the orderer, the filled container filled with the resin composition thawed to the conveyance temperature while maintaining a temperature equal to or lower than the conveyance temperature, wherein
the phase transition temperature is a temperature at which heat absorption is first generated in DSC ($\mu$W) when the temperature is raised at a temperature raising rate of 10°C/min from -200°C by differential scanning calorimetry.

2. A shipping method comprising:

a step of receiving, based on an instruction from an orderer, a filled container obtained by filling a predetermined container with a resin composition;
a step of inputting the number of filled containers to a computer;
a step of cooling the resin composition in the filled container to a phase transition temperature at a specific cooling rate by a thermostatic chamber;
a step of storing the resin composition cooled to the phase transition temperature in a cooling box at a temperature equal to or lower than the phase transition temperature;
a step of receiving the number of shipping of the filled containers from the orderer;
a step of thawing the resin composition in some or all of the filled containers stored in the cooling box, based on the number of shipping, to a conveyance temperature at a specific temperature raising rate by the thermostatic chamber; and
a step of shipping, to the orderer, the filled container filled with the resin composition thawed to the conveyance temperature while maintaining a temperature equal to or lower than the conveyance temperature, wherein
the phase transition temperature is a temperature lower by 15°C than a temperature of a DDSC ($\mu$W/min) local maximum when the temperature is raised at a temperature raising rate of 10°C/min from -200°C by differential scanning calorimetry.

3. The shipping method according to claim 1 or 2, wherein the specific cooling rate is a rate at which the inside of a chamber in the thermostatic chamber is cooled at a cooling rate of 10°C/min or more.

4. The shipping method according to claim 1 or 2, wherein the specific cooling rate is a rate at which a resin temperature of the resin composition is reduced at a cooling rate of 2.0°C/min or more.

5. The shipping method according to claim 1 or 2, wherein the phase transition temperature is -5°C or lower.

6. The shipping method according to claim 1 or 2, wherein the resin composition contains a curable resin.

7. The shipping method according to claim 1 or 2, wherein the specific temperature raising rate is a rate at which the inside of a chamber in the thermostatic chamber is heated at a temperature raising rate of 1.0°C/min or less.

8. The shipping method according to claim 1 or 2, wherein the resin composition stored for at least one year exists in the cooling box.

9. A shipping method comprising:

a step of receiving, based on an instruction from an orderer, a filled container obtained by filling a predetermined container with a resin composition;
a step of inputting the number of filled containers to a computer;
a step of cooling the resin composition in the filled container to a temperature of -5°C or lower at a cooling rate of 10°C/min or more by a thermostatic chamber;
a step of storing the resin composition cooled to the temperature of -5°C or lower in a cooling box at the temperature of -5°C or lower;
a step of receiving the number of shipping of the filled containers from the orderer;
a step of thawing the resin composition in some or all of the filled containers stored in the cooling box, based on the number of shipping, to a conveyance temperature at a temperature raising rate of 1.0°C/min or less by the thermostatic chamber; and
a step of shipping, to the orderer, the filled container filled with the resin composition thawed to the conveyance temperature while maintaining a temperature equal to or lower than the conveyance temperature.

10. A cooling and thawing method for a filled container obtained by filling a predetermined container with a resin composition, the cooling and thawing method comprising:

a step of cooling the filled container obtained by filling the predetermined container with the resin composition to a temperature of -5°C or lower at a cooling rate of 10°C/min or more by a thermostatic chamber;
a step of storing the resin composition cooled to the temperature of -5°C or lower in a cooling box at the temperature of -5°C or lower; and
a step of thawing the resin composition in the filled containers stored in the cooling box at a temperature raising rate of 1.0°C/min or less by the thermostatic chamber.

11. A shipping system for shipping a filled container obtained by filling a predetermined container with a resin composition after receiving and storing the filled container, the shipping system comprising:

a temperature information acquisition unit acquiring temperature information regarding a phase transition temperature of the resin composition;
a first temperature adjustment unit adjusting the resin composition in the filled container to the phase transition temperature based on the temperature information;
a storage unit storing the resin composition adjusted to the phase transition temperature at a temperature equal to or lower than the phase transition temperature;
a number-of-shipping information acquisition unit acquiring number-of-shipping information regarding the number of shipping of the filled containers; and
a second temperature adjustment unit adjusting the resin composition in some or all of the filled containers stored in the storage unit, based on the number-of-shipping information, to a conveyance temperature, wherein
the phase transition temperature is a temperature at which heat absorption is first generated in differential scanning calorimetry in which the resin composition is heated at a temperature raising rate of 10°C/min from -200°C.

12. A shipping system for shipping a filled container obtained by filling a predetermined container with a resin composition after receiving and storing the filled container, the shipping system comprising:

a temperature information acquisition unit acquiring temperature information regarding a phase transition temperature of the resin composition;
a first temperature adjustment unit adjusting the resin composition in the filled container to the phase transition temperature based on the temperature information;
a storage unit storing the resin composition adjusted to the phase transition temperature at a temperature equal to or lower than the phase transition temperature;
a number-of-shipping information acquisition unit acquiring number-of-shipping information regarding the number of shipping of the filled containers; and
a second temperature adjustment unit adjusting the resin composition in some or all of the filled containers stored in the storage unit, based on the number-of-shipping information, to a conveyance temperature, wherein
the phase transition temperature is a temperature lower by 15°C than a temperature of a local maximum in dynamic differential scanning calorimetry in which the resin composition is heated at a temperature raising rate of 10°C/min from -200°C.

13. The shipping system according to claim 11 or 12, wherein the first temperature adjustment unit includes a thermostatic chamber, and adjusts the resin composition to the phase transition temperature by adjusting an internal temperature of a chamber of the thermostatic chamber at a rate of 10°C/min or more.

14. The shipping system according to claim 11 or 12, wherein the first temperature adjustment unit adjusts a resin temperature of the resin composition at a rate of 2.0°C/min or more.

15. The shipping system according to claim 11 or 12, wherein the phase transition temperature is -5°C or lower.

16. The shipping system according to claim 11 or 12, wherein the resin composition contains a curable resin.

17. The shipping system according to claim 11 or 12, wherein the second temperature adjustment unit includes a thermostatic chamber, and adjusts the resin composition to the conveyance temperature by adjusting an internal temperature of a chamber of the thermostatic chamber at a rate of 1.0°C/min or less.

18. The shipping system according to claim 11 or 12, wherein the storage unit is configured to be able to store the filled container for one year or more.

19. A shipping system for shipping a filled container obtained by filling a predetermined container with a resin composition after receiving and storing the filled container, the shipping system comprising:

a first temperature adjustment unit adjusting the resin composition in the filled container to a temperature of -5°C or lower at a cooling rate of 10°C/min or more;
a storage unit storing the resin composition adjusted to the temperature of -5°C or lower at the temperature of -5°C or lower;
a number-of-shipping information acquisition unit acquiring number-of-shipping information regarding the number of shipping of the filled containers; and
a second temperature adjustment unit adjusting the resin composition in some or all of the filled containers stored in the storage unit, based on the number-of-shipping information, to a conveyance temperature at a temperature raising rate of 1.0°C/min or less.

FIG. 1

FIG. 2

10

| | | |
|---|---|---|
| 11 CONTROL UNIT | | OPERATION DISPLAY UNIT 14 |
| 12 STORAGE UNIT | | |
| 13 COMMUNICATION UNIT | | |

FIG. 3

```
            ┌─────────────┐
            │    START    │
            └──────┬──────┘
                   │
   S101  ┌─────────────────────────┐
         │  RECEIVE FILLED CONTAINER │
         └─────────────────────────┘
                   │
   S102  ┌─────────────────────────┐
         │     INPUT NUMBER OF       │
         │   FILLED CONTAINERS       │
         └─────────────────────────┘
                   │
   S103  ┌─────────────────────────┐
         │ COOL TO PHASE TRANSITION  │
         │       TEMPERATURE         │
         └─────────────────────────┘
                   │
   S104  ┌─────────────────────────┐
         │ STORE AT PHASE TRANSITION │
         │   TEMPERATURE OR LOWER    │
         └─────────────────────────┘
                   │
   S105  ┌─────────────────────────┐
         │     RECEIVE NUMBER OF     │
         │        SHIPPING           │
         └─────────────────────────┘
                   │
   S106  ┌─────────────────────────┐
         │    THAW TO CONVEYANCE     │
         │       TEMPERATURE         │
         └─────────────────────────┘
                   │
   S107  ┌─────────────────────────┐
         │   CONVEY AT CONVEYANCE    │
         │   TEMPERATURE OR LOWER    │
         └─────────────────────────┘
                   │
            ┌──────┴──────┐
            │     END     │
            └─────────────┘
```

# FIG. 4

START

S301 RECEIVE FILLED CONTAINER

S302 INPUT NUMBER OF
FILLED CONTAINERS

S303 COOL TO TEMPERATURE OF
$-5°$ C OR LOWER

S304 STORE AT TEMPERATURE OF
$-5°$ C OR LOWER

S305 RECEIVE NUMBER OF
SHIPPING

S306 THAW TO CONVEYANCE
TEMPERATURE

S307 CONVEY AT CONVEYANCE
TEMPERATURE OR LOWER

END

FIG. 5

<u>11</u>

| | |
|---|---|
| QUANTITY INFORMATION ACQUISITION UNIT ~111 | NUMBER-OF-SHIPPING INFORMATION ACQUISITION UNIT ~115 |
| FIRST TEMPERATURE INFORMATION ACQUISITION UNIT ~112 | SECOND TEMPERATURE INFORMATION ACQUISITION UNIT ~116 |
| FIRST TEMPERATURE ADJUSTMENT UNIT ~113 | SECOND TEMPERATURE ADJUSTMENT UNIT ~117 |
| STORAGE UNIT ~114 | |

# FIG. 6

```
                    ┌─────────────┐
                    │    START    │
                    └─────────────┘
                           │
        ┌──────────────────────────────────┐
  S201  │      ACQUIRE QUANTITY            │
        │        INFORMATION               │
        └──────────────────────────────────┘
                           │
        ┌──────────────────────────────────┐
  S202  │        ACQUIRE FIRST            │
        │   TEMPERATURE INFORMATION        │
        └──────────────────────────────────┘
                           │
        ┌──────────────────────────────────┐
  S203  │       COOL INSTRUCTION           │
        └──────────────────────────────────┘
                           │
        ┌──────────────────────────────────┐
  S204  │      STORE INSTRUCTION           │
        └──────────────────────────────────┘
                           │
        ┌──────────────────────────────────┐
  S205  │     ACQUIRE NUMBER-OF-          │
        │    SHIPPING INFORMATION          │
        └──────────────────────────────────┘
                           │
        ┌──────────────────────────────────┐
  S206  │       ACQUIRE SECOND             │
        │  TEMPERATURE INFORMATION         │
        └──────────────────────────────────┘
                           │
        ┌──────────────────────────────────┐
  S207  │        INSTRUCT TO              │
        │     RAISE TEMPERATURE            │
        └──────────────────────────────────┘
                           │
                    ┌─────────────┐
                    │     END     │
                    └─────────────┘
```

FIG. 7

DSC MEASUREMENT OF TB3127

FIG. 8

DSC MEASUREMENT OF TB3331F

FIG. 9

COOLING TEST

RESIN TEMPERATURE AT TIME OF
USING THERMOSTATIC CHAMBER 1
INTERNAL TEMPERATURE OF CHAMBER
OF THERMOSTATIC CHAMBER 1
RESIN TEMPERATURE AT TIME OF
USING THERMOSTATIC CHAMBER 2

TEMPERATURE (°C)

ELAPSED TIME (MINUTE)

EP 4 458 748 A1

## INTERNATIONAL SEARCH REPORT

International application No.

**PCT/JP2022/048197**

### A. CLASSIFICATION OF SUBJECT MATTER

***B65G 61/00***(2006.01)i
FI: B65G61/00 500

According to International Patent Classification (IPC) or to both national classification and IPC

### B. FIELDS SEARCHED

Minimum documentation searched (classification system followed by classification symbols)

B65G61/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2017/164304 A1 (KANEKA CORP) 28 September 2017 (2017-09-28) | 1-19 |
| A | JP 2017-171745 A (THREE BOND CO LTD) 28 September 2017 (2017-09-28) | 1-19 |
| A | JP 2005-156147 A (HOSHIZAKI ELECTRIC CO LTD) 16 June 2005 (2005-06-16) | 1-19 |
| A | WO 2019/235279 A1 (SHARP KK) 12 December 2019 (2019-12-12) | 1-19 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 March 2023** | **28 March 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/048197**

| Patent document cited in search report | | | Publication date (day/month/year) | Patent family member(s) | | | Publication date (day/month/year) |
|---|---|---|---|---|---|---|---|
| WO | 2017/164304 | A1 | 28 September 2017 | US | 2019/0023958 | A1 | |
| | | | | EP | 3434747 | A1 | |
| | | | | CN | 108884380 | A | |
| JP | 2017-171745 | A | 28 September 2017 | (Family: none) | | | |
| JP | 2005-156147 | A | 16 June 2005 | US | 2005/0092012 | A1 | |
| WO | 2019/235279 | A1 | 12 December 2019 | US | 2021/0247122 | A1 | |
| | | | | CN | 112272750 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021213787 A